# EUROPEAN PATENT APPLICATION

(11) **EP 3 663 994 A1**
(43) Date of publication of application: **10.06.2020**
(21) Application number: 19460056.5
(22) Date of filing: 06.11.2019
(51) Int. Cl.: G06Q 10/00, G06Q 30/00, G06Q 30/02

(54) **MOBILE SYSTEM AND METHOD OF SELECTING AND PRESENTING CONTENT IN PARTICULAR DYNAMIC PERSONALIZED ADVERTISING**

(30) Priority: 09.11.2018 PL 42772418
(71) Applicant: RTM Innovation sp. z o.o., 44-100 Gilwice (PL)
(72) Inventor: Skorupowski, Michal Pawel, 03-290 Warszawa (PL); Chraniuk, Tomasz Lukasz, 05-074 Halinów (PL); Bzymek, Anna Beata, 44-100 Gliwice (PL)

(57) **Abstract**

The method of selecting and presenting content in particular dynamic personalized advertising using data from local sensors and artificial intelligence algorithms **characterized in that** in the first step data (D) flowing from local sensors (C) is read, i.e. information about the ambient conditions, preferably such a : location and speed of movement, weather conditions, traffic, the number of potential recipients, sex, age, and then,
in the second step, preliminary processing of the acquired (WPD) data (D) is carried out, and the acquired data (D) and the result of the preliminary data analysis (WA) are imported into intelligent analysis algorithms (Al) operating locally, preferably in memory (P) of the mobile control unit content (1), in the third step, an intelligent analysis (AI) is made by the algorithms - preferably algorithms of artificial intelligence (S) and / or decision trees, and / or decision tables and/or self-learning mechanisms (MS), preferably by neural networks - self-learning networks , whereas in the fourth step artificial intelligence (S) and / or self-learning mechanisms (MS) match the presented content - the advertisement (R), to the recipients of the content / environment (O) and then displays it on the advertising content carrier (N).

Mobile system of selecting and presenting content in particular dynamic personalized advertising using the content control unit and display **characterized in that,** the system is made of: mobile content control unit (1), display module (2), advertising content management module (3), while the mobile content control unit (1) has a memory (P) and is wired and / or wireless connected to: the display module (2) being the carrier of advertising content (N) and the sensors (C), wherein the mobile content control unit (1) is wireless connected, preferably using GSM or Wi-fi or Bluetooth, with the CMS advertising content management module (3);while the mobile content control unit (1) and display module (2) are placed on a mobile running platform (RP), preferably a semi-trailer or truck or bus or streetcar.

## Description

The subject of the invention is a mobile system and method of selecting and presenting content in particular dynamic personalized advertising, also called RTM TRANSPORT.

From the Polish industrial design No PL125816 is known a transportable visual advertisement on ground vehicles. All variants of the device for mobile visual advertising on means of transport they can be used on various means of transport. According to the first variant, the device comprises a base (2) which is formed of polymeric materials in such a way that its rear part corresponds to the form of the rear part of the means of transport on which it is installed, and the front part is adapted to mount the advertising medium in the frame containing inside advertising material (6), has recesses and stiffening ribs. The central depression is round, on one line with it, symmetrically from two sides, there are rectangular depression, adjacent to the side walls of the front of the base. Below the circular recess is a circular hole. The stiffening ribs run from the round recess to the corners of the front part of the base, with the axes of the stiffening ribs intersecting at the center of the round recess, and the stiffening ribs themselves have the form of grooves of equal length, width and depth.

From the Polish Patent PL417235 discloses a system and method for monitoring the effectiveness of ads. The advertising effectiveness monitoring system, equipped with a microcomputer and camera, is characterized by the fact that it consists of a microcomputer (MK) that communicates and exchanges data bidirectionally with at least one camera (K) and a GSM modem (MO), in addition a microcomputer (MK) communicates and exchanges data two-way with the current sensor (CzP) and the heater module (MG), where the current sensor (CzP) is connected to lighting circuit A (OOA) and lighting circuit B (OOB), in addition, the microcomputer (MK) communicates is bi-directional and exchanges data with the server (S), while the microcomputer (MK) is powered by the power supply (Z), which is connected to the power source (Zas). The method of monitoring the advertising effectiveness, equipped with a microcomputer and camera, consists in the first stage sending the image from the camera (K) to the microcomputer (MK), in the second stage the microcomputer (MK) processes the received data, in the third stage the microcomputer (MK)) sends data to the server (S), preferably every 30 minutes.

From Chinese Patent No. CN107516239 discloses a system for managing ads by artificial intelligence on the media screen . Intelligent mobile technology on various screens refers to the intelligent tracking of the movement of a crowd of fans, in which the movement takes place from advertising of the mobile terminal to advertising in offline media, i.e. it is shown in real time or with delay. According to various customer requirements, product data and the corresponding advertising medium can be intelligently adapted to the different requirements of customers, and user navigation throughout the system, intelligent advertising and promotion of the brand in full-screen mode are adjusted by the advertiser.

From the Chinese patent description CN103295495 a "suspension" multimedia advertising screen is known. The invention discloses a multimedia suspension advertising screen. The multimedia suspension advertising screen consists of an advertising screen, a support base, an overlay and an electrical system. A multimedia advertising screen of the suspension type is characterized in that the legs supporting the advertising screen at the bottom of the advertising screen are tightly attached to the supporting base; the bottom of the support base is attached on the mounting platform to the support base at the top of the hard cap; the media player's electrical circuits, active speaker, power and advertising screen are connected to each other in an appropriate manner; an advertising employee may put on a hard cap with a multimedia advertising screen attached, thanks to which the employee may use a moving advertising image displayed on an advertising screen placed high on the head, as well as sound from a synchronizing loudspeaker to perform mobile advertising in a crowd during large events public; advertising is more active and lively.

From Korean Patent No. KR20150059217 a method of local advertising using a mobile advertising leaflet is known . The present invention relates to a localized advertising method using a mobile leaflet, and more specifically, a method in which an advertiser provides mobile advertising to a person who has subscribed and is located in an area in the advertiser's business zone. The local advertising method using a mobile leaflet includes: the information acquisition stage (S10) regarding the acquisition of information about advertisers and users and the storage of information on a server (10); tracking information tracking step (S20) of transmitting the number of users in the area in which the advertiser's mobile device (20) is located to the mobile advertising device (20); calculating advertising costs and the notification stage (S30) calculating advertising costs using the number of user mobile devices (30) sent in the tracking information transmission stage (S20) and sending the advertising costs to the advertiser's mobile device (20) to notify the advertiser; the stage of saving information about the advertisement (S40) saving the mobile leaflet, which is advertising information written by the advertiser on the server (10); stage of searching for advertising information (S50) about checking a mobile leaflet, which is advertising information saved on the server (10); the step of sending information about the advertisement (S60) of transmitting the checked leaflet, which is advertising information for the user's mobile devices (30); the step of determining the receipt of advertisement information (S70) determining whether the user has opened the mobile leaflet, which is advertising information sent to the user's mobile devices (30); and the rebate point payment stage (S80) consisting of granting a rebate or coupon to the user based on the result of whether the user received and opened the mobile leaflet, which is advertising information.

The aim of the invention is to develop a new mobile system for selection, presentation and advertising management of both acting :1. locally - autonomously, based on predefined rules, and 2. as well as acting using the rules in the cloud, and remote management through the cloud , while also employs in the rules of self-learning and artificial intelligence , in for better it is efficient selection of content presented ads to customers using defined assumptions from advertisers advertising campaign and whether exemptions of advertisers is.

The method according to the invention **characterized in that,** in the first step data (D) flowing from local sensors (C) is read, i.e. information about the ambient conditions, preferably such a : location and speed of movement, weather conditions, traffic, the number of potential recipients , sex, age, and then, in the second step, preliminary processing of the acquired (WPD) data (D) is carried out, and the acquired data (D) and the result of the preliminary data analysis (WA) are imported into intelligent analysis algorithms (Al) operating locally, preferably in memory (P) of the mobile control unit content (1), in the third step, an intelligent analysis (Al) is made by the algorithms - preferably algorithms of artificial intelligence (S) and / or decision trees, and / or decision tables and/or self-learning mechanisms (MS), preferably by neural networks - self-learning networks , whereas in the fourth step artificial intelligence (S) and / or self-learning mechanisms (MS) match the presented content - the advertisement (R), to the recipients of the content / environment (O) and then displays it on the advertising content carrier (N).
Cyclically is made to adapt the content of the advertisement (R) to the recipients (O) at preferably 10 minutes, and / or due to changes in ambient conditions, and / or changes of recipients , and / or changes of location of the mobile content control unit (1) and / or external event, by cycling through all its four steps.
Artificial intelligence (S) and / or self-learning mechanisms (MS) allow tutoring and improve preferably the rules of the system to present content - advertisement (R), to the most customized predefined recipients (O), which means recognized recipients or their absence, while additionally, it is possible tutoring system on the basis of historical data stored in the cloud.
In the fourth step is displayed a presented content - advertisement (R), which is precisely matched to a particular place and / or time and / or external conditions and / or projected / previously recognized / pre-defined preferences of recipients of content (O).
The presented content is displayed - advertisement(R) tailored to different groups of recipients (O) in different geographical, ethnic or linguistic regions, and adapted to external factors in correlation with the rules determined by promotional strategy of advertisers, in relation to one and / or entire groups of products, preferably advertisement (R) can be displayed in a loop.
In the fourth step, displays presented content - advertisement (R) is precisely adapted to the recipients (O), wherein the system rules enables to make a restrictions for advertisers i.e. restrictions on the delivery requirements advertisement (R), preferably content, position and time restrictions of other advertisers.

Mobile system of selecting and presenting content in particular dynamic personalized advertising according to the invention **characterized in that,** the system is made of: mobile content control unit (1), display module (2), advertising content management module (3), while the mobile content control unit (1) has a memory (P) and is wired and / or wireless connected to: the display module (2) being the carrier of advertising content (N) and the sensors (C), wherein the mobile content control unit (1) is wireless connected, preferably using GSM or Wi-fi or Bluetooth, with the CMS advertising content management module (3);while the mobile content control unit (1) and display module (2) are placed on a mobile running platform (RP), preferably a semi-trailer or truck or bus or streetcar.
The advertising content management module (3) is preferably software located in the cloud and contains a remote content management system (CMS).
As sensors (C) are used sensors, preferably: temperature, pressure, time of day - preferably station weather, and the camera/cameras, wherein the sensor (C) can be used the telematics system.
The mobile content control unit (1) consists of connected, communicating and cooperating with each other:
- mobile operating system for content management (4),
- System database (5),
- Remote communication system between the mobile management system and the central cloud content management system (6),
- Repository advertising content (7), which is the physical space it in the memory card ,
- Input bus connecting sensors and external devices (cameras) with a mobile content management system (8),
- System of image processing from external cameras (9),
- System of artificial intelligence a decision engine containing rules, conditions that process external signals and decide how the content is to be displayed depending on the parameters set (10),
- Output bus transmitting the image to an external display (11) which is a carrier for advertising content (N),
- auto-diagnostic software (12).
- Power supply system (13).
As a carrier of advertising content (N) a large-format LED display is used, preferably made of flexible material and with a high tightness class, preferably IP69K, preferably composed of segments - panels (SE), preferably printed and glued in the form of a sticker.
The advertising content management module (3) is responsible for the process of export presented content - advertisements (R) to the mobile system, and planning their emissions in mobile systems, as well as sending finished emissions planner, the verification result and reporting reports as well as their archiving.
The advertising content management module (3) comprises a decision engine preferably is in the form of software and / or algorithm , which enables the decision, as to which advertising content (R), on the basis of their description, to which mobile system is send also including using archival - historical information.
The advertising content carrier (N) is placed on the side of the mobile running platform (RP) preferably on at least one vertical longitudinal and / or transverse side - a semi-trailer or truck or bus or tram/street car.
The mobile content control unit (1) and the display module (2) are located locally, which means permanently in the place of the advertisement presentation, preferably at stationary displays and / or crossroads.

Advantage of the solution according to the invention is that, the mobile content control unit is managed autonomously and processes data locally, in the absence of network access or communication with the cloud data - the rules contained in the content management module, thus allowing normal operation of the mobile system recovery time or establishing communication with the rest of the system is an advertising content management module.
Thus, no fixed coverage or communication is required for the continuous operation of the mobile system according to the invention, regardless of the ambient conditions.

In addition, the advantage of the inventive solution is that the mobile system in the memory of the mobile content control unit has pre-loaded advertisements and basic rules necessary for autonomous operation in the absence of coverage or communication with the rest of the system. However, after regaining coverage and communication with the rest of the system, the new data and rules are downloaded and updated as advertisers expect.

Additionally advantage of the solution is capable of updating / learning the rules and principles of Al locally, it is a mobile control unit content, as well as globally for all devices in the system - which involves learning, exchange data and rules through a cloud of data in module management of advertising content, which allows constant learning and increasing the base of rules and data and thereby better matching ads to content-defined audiences.

The RTM TRANSPORT system was invented for mass presentation of advertising content anywhere in the world using any advertising space available on any vehicle as a carrier, using a flexible LED display and artificial intelligence algorithms.

### Practical application of the RTM TRANSPORT system:

With the ability to simultaneously control the message on all installed RTM TRANSPORT systems - the system operator receives the largest (nationwide, region, continent) network of dynamic media, personalized advertising or information message.

The device will consist of three main modules:
1. Mobile content control unit (RTM TRANSPORT MOBILE)
2. Display module (RTM TRANSPORT DISPLAY FLEX)
3. Module for managing advertising content in the cloud (RTM TRANSPORT CLOUD SYSTEM)

### I. Mobile content control unit (RTM TRUCK MOBILE)

The control unit will be a structure based on a microcomputer working with memory units and graphics card / cards, operating on the basis of dedicated control software. The task of the control unit will be the continuous analysis of data flowing from locally (preferably on the semi-trailer) installed sensors providing information on ambient conditions - (location, movement speed, weather conditions, time, traffic volume, number of potential recipients) and correlation of these data with the rules stored in unit memory. The use of self-learning mechanisms and artificial intelligence will allow, on the basis of data correlation with rules, to emit an advertising / information message precisely tailored to a given place, time, external conditions, and recipient preferences.
The advertising / information message will be built from resources (images, video files, background) located in the local memory of the control unit. The stock of materials will be updated each time in accordance with the planned route of the semi-trailer and the orders of the advertisers. Advertising / information resources will be sent from the central system - advertisement content management module in the cloud (RTM TRUCK CLOUD SYSTEM) using various methods of remote data transmission, including GSM, WIFI and bluetooth. The control unit will be an independent component mounted e.g. in any telematics solution or will be an autonomous system located in a housing with high IP69K tightness class.

The technical and functional architecture of the mobile content control unit (RTM TRUCK MOBILE) includes:
1. The operating system of the mobile content management system
2. System Database
3. A remote communication system between the mobile management system and the central cloud content management system
4. Advertising content repository, physical space on the memory card
5. An input bus that connects sensors / external devices (cameras) with a mobile content management system
6. Image processing system from external cameras
7. Artificial intelligence system, a decision engine containing rules, conditions that process external signals and decide how the content is to be displayed depending on the parameters set
8. Output bus transmitting the image to an external display
9. Auto-diagnostic software
10. Power supply system

The goal of this solution is to create a mobile, i.e. unattached to a specific place, advertising platform emitting an advertising message precisely adapted to an unlimited number of external factors in correlation with the rules determined, among others through the advertiser's promotional strategy for one or entire product groups. This will allow advertisers to use one advertising platform to broadcast a diverse advertising message designed for different audiences in different geographical, ethnic or linguistic regions.

### II. Display module (RTM TRUCK DISPLAY FLEX)

The display module will include a large format display based on LED technology, whose primary function will be the emission of an advertising / information message generated by the control unit.

### Display features:

- Made of flexible material
- IP69K tightness class
- Operating in the temperature range -40 - +80 ° C
- Maximum thickness, preferably 10 millimeters
- The ability to combine any number of segments vertically and horizontally
- Modular construction
- Each LED element can be replaced independently

The goal of this solution is to use the surface of semi-trailers for the emission of moving, interactive images dynamically changing depending on the established rules. To date, there is no large-format, mobile advertising system that uses semitrailers for tractors as an advertising platform / carrier.

### III.Cloud advertising content management module (RTM TRUCK CLOUD SYSTEM)

This module will be responsible for the entire process of importing advertising content, planning their broadcasting, including archiving, sending ready broadcasts from the planner, verifying the result and other reporting reports.

The subject of the invention is explained in the examples of drawings in which :
Fig. 1 shows the structure of the mobile system according to the invention,
Fig. 2 shows how the selection and presentation of content, especially dynamic personalized advertising, using of a mobile system as implemented in the cloud,
Fig. 3 shows how the content is selected and presented, especially dynamic personalized advertising, using a mobile system implemented locally,

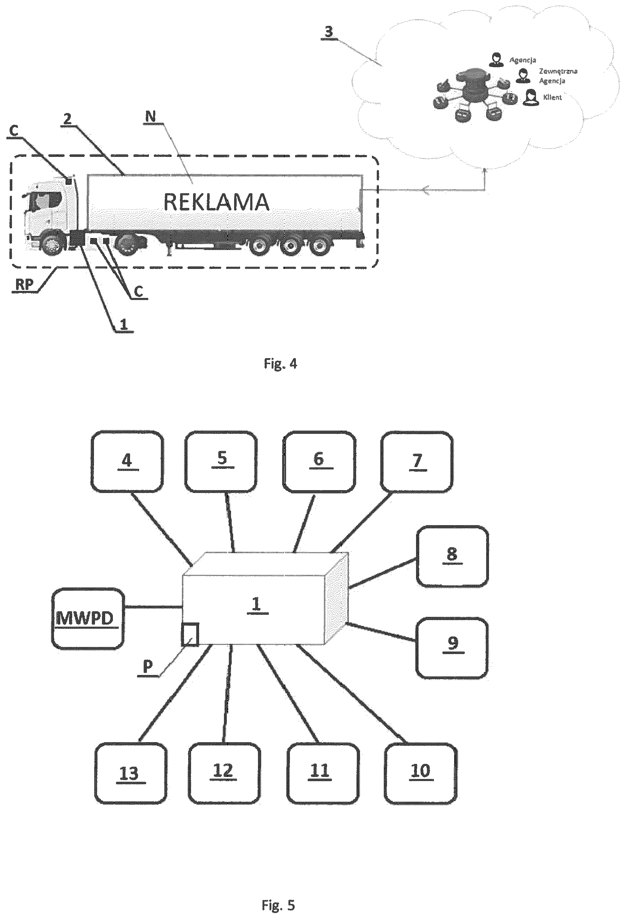

Fig. 4 shows the structure of the mobile system according to the invention,
FIG. 5 shows the architecture of mobile unit control content,

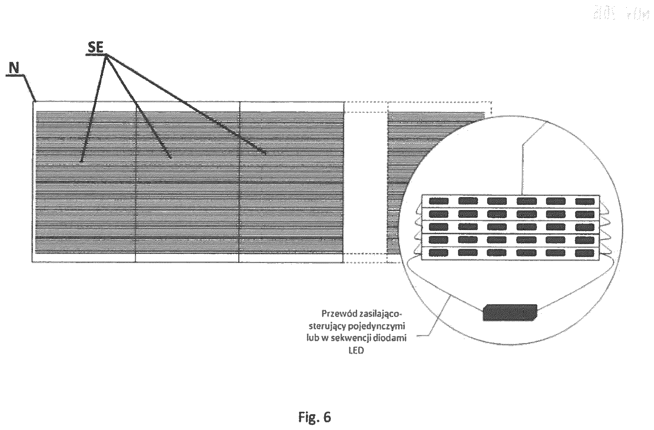

Fig. 6 shows a modular construction of a display - LED.

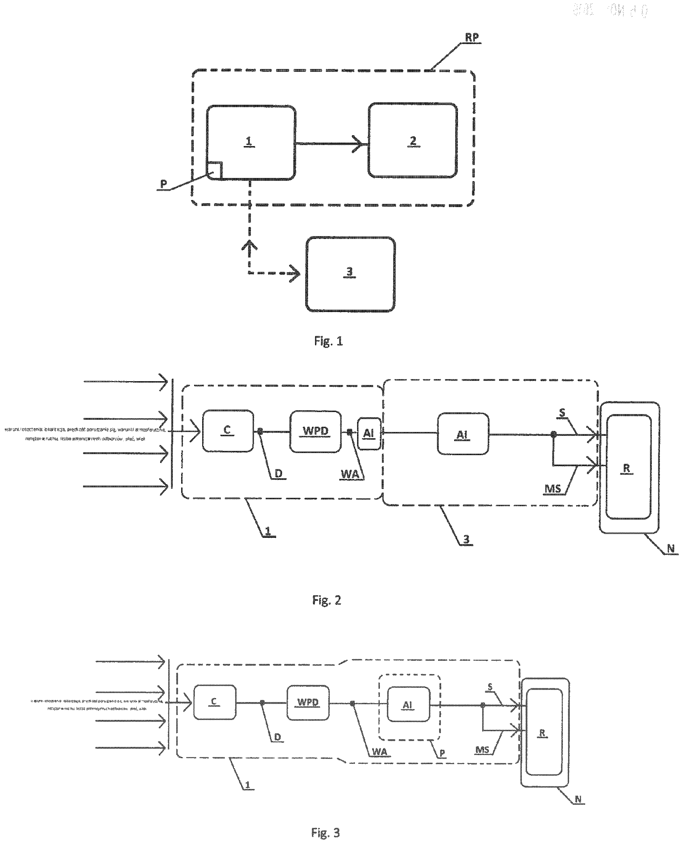

### Example 1 (system implemented globally fig. 2, mobile running platform (RP) - semi-trailer)

In the first step data (D) flowing from local sensors (C) is read, i.e. information about the ambient conditions, preferably such a : location and speed of movement, weather conditions, traffic, the number of potential recipients, sex, age.

In the second step, preliminary processing of the acquired (WPD) data (D) is performed, and the acquired data (D) and the result of the preliminary data analysis (WA) are imported into intelligent analysis algorithms (Al) operating locally, in the memory (P) of the mobile content control unit (1). In the third step you impresses analysis is intelligent (Al) using algorithms - artificial intelligence (S) - eg. decision trees.

In the fourth step, artificial intelligence (S) selects the presented content - the advertisement (R) to the recipients of the content / environment (O) and then displays it on the advertising content carrier (N).

The mobile platform (RP) stops before the pedestrian crossing / at the stop - an analysis of the environment is carried out - analysis of people (O) at the pedestrian crossing - recognition - number of people - women / men / children / young people and the appropriate content of the advertisement is selected (R):
- if there are about 40 women at the bus stop / crossing - e.g. advertisement (R) of face cream 35+ is displayed;
- if most children are there - advertising (R) is healthy lens.

The ad content (R) is cyclically adapted to the recipients (O) i.e. every 10 minutes, and / or in connection with a change in environmental conditions, and / or a change in recipients, and / or a change in the location of the mobile content control unit (1) and / or an external event by cyclically passing all four steps.

Artificial intelligence (S) allows a tutoring (learning) and improve and not the rules of the system so that the presented content - ads (R) as the most suitable was to predefined recipients (O) is identified recipients, or lack thereof, with the addition, it is possible tutoring system based on historical data stored in the cloud.

In the fourth step, the presented content is displayed - a precise (R) advertisement tailored to a given place and / or time and / or external conditions and / or anticipated / previously identified / previously defined preferences of content recipients (O).
The presented content is displayed - the advertisement (R) tailored to different groups of recipients (O) in different geographical, ethnic or linguistic regions, and adapted to external factors in correlation with the rules determined by the advertiser's promotional strategy in relation to one and / or entire groups products, while (R) ads may appear in a loop.

Also in the fourth step, the presented content is displayed - (R) precise ad tailored to the recipients (O), while the system rules allow for the exclusion of advertisers, i.e. restrictions on the requirements of displaying (R) content, position, time restrictions or other advertisers.

The mobile system is (consists of): a mobile content control unit (1), a display module (2), an advertising content management module (3), where the mobile content control unit (1) contains memory (P) and is wired and / or wirelessly connected: display module (2) being the advertising content carrier (N) and with sensors (C), while the mobile content control unit (1) is connected wirelessly, via GSM or Wi-fi or Bluetooth, with the CMS advertising content management module (3 ), and the mobile content control unit (1) and display module (2) are placed on a mobile running platform (RP) by truck or bus .
Advertising content management module (3) software is placed in the cloud, and includes a remote content management system (CMS).
As sensors (C), are used sensors such as: temperature sensor, pressure sensor, time of day weather station, and cameras (s), but also a telematics system can be used as sensor (C).
The content control unit (1) consists of connected, communicating and cooperating with each other:
- operating system of the mobile content management system (4),
- System database (5),
- Remote communication system between the mobile management system and the central cloud content management system (6),
- Advertising content repository (7) being the physical space in the memory card,
- Input bus connecting sensors and external devices (cameras) with a mobile content management system (8),
- Image processing system from external cameras (9),
- Artificial intelligence system, a decision engine containing rules, conditions that process external signals and decide how the content is to be displayed depending on the parameters set (10),
- Output bus transmitting the image to an external display (11) i.e. to an advertising content carrier (N),
- auto-diagnostic software (12),
- Power supply system (13).

As the advertising content carrier (N), a large-format LED display made of flexible material and with a high IP69K tightness class is used, composed of segments - panels (SE), printed and glued in the form of a sticker.
The advertising content management module (3) is responsible for the process of exporting the presented content - ads (R) to the mobile system, planning their emission in mobile systems, as well as sending the finished emission from the planner, verifying the result and reporting reports as well as archiving them.
The advertising content management module (3) contains a decision engine in the form of software and / or software and / or algorithm that allows you to decide what advertising content (R), based on their description, to which mobile system to send, including using archival information - historical. The advertising banner (N) is placed on the side of the mobile platform (RP) on at least one vertical longitudinal and / or transverse side - the semi-trailer.

### Example 2 (Figure 2, system implemented globally, the mobile ride platform (RP) - truck or bus)

In the first step data (D) flowing from local sensors (C) is read, i.e. information about the ambient conditions, preferably such a : location and speed of movement, weather conditions, traffic, the number of potential recipients, sex, age

In the second step, preliminary processing of the acquired (WPD) data (D) is performed, and the acquired data (D) and the result of the preliminary data analysis (WA) are imported into intelligent analysis algorithms (Al) operating locally, in the memory (P) of the mobile content control unit (1).

In the third step performs the intelligent analysis (Al) by means of algorithms - artificial intelligence (S), and mechanisms of self-learning (MS) - neural networks - a network of self-learning.

In the fourth step, artificial intelligence (S) and self-learning mechanisms (MS) match the presented content - the advertisement (R) to the recipients of the content / environment (O), after which the content is displayed on the advertising content carrier (N).

The mobile platform (RP) stands in a traffic jam: in the morning on a cloudy day - an advertisement (R) is displayed, e.g. about freshly ground coffee, and on Friday afternoon e.g. an advertisement (R) of cinemas, travel agencies and places depending on the weather - what you can do on a free weekend, if in winter - e.g. skiing.

The ad content (R) is cyclically adapted to the recipients (O), i.e. every 15 minutes, and / or in connection with a change in environmental conditions, and / or a change in recipients, and / or a change in the location of the mobile content control unit (1) and / or an external event by cyclically passing all four steps.

Artificial intelligence (S) and the mechanisms of self-learning (MS) allow tutoring(learning) and improve and rules of the system so that the presented content - ads (R) fits as the most suitable to predefined recipients (O) (is recognized recipients or their absence), the in addition, it is possible to learn the system based on historical data stored in the cloud.

In the fourth step, the presented content is displayed - a precise advertisement(R) tailored to a given place and / or time and / or external conditions and / or anticipated / previously identified / previously defined preferences of content recipients (O).
The presented content is displayed - the advertisement (R) tailored to different groups of recipients (O) in different geographical, ethnic or linguistic regions, and adapted to external factors in correlation with the rules determined by the advertiser's promotional strategy in relation to one and / or entire groups products, while ads (R) may appear in a loop.

Also in the fourth step, the presented content is displayed - precise ad(R) is tailored to the recipients (O), while the system rules allow for the exclusion of advertisers, i.e. restrictions on the requirements of displaying (R) content, position, time restrictions or other advertisers.

The mobile system is (consists of): a mobile content control unit (1), a display module (2), an advertising content management module (3), where the mobile content control unit (1) contains memory (P) and is wired and / or wirelessly connected: display module (2) being the advertising content carrier (N) and with sensors (C), while the mobile content control unit (1) is connected wirelessly, via GSM or Wi-fi or Bluetooth, with the CMS advertising content management module (3 ), and the mobile content control unit (1) and display module (2) are placed on a mobile running platform (RP) by truck or bus.
Advertising content management module (3) software is placed in the cloud, and includes a remote content management system (CMS).
As sensors (C), are used sensors such as: temperature sensor, pressure sensor, time of day weather station, and cameras (s), but also a telematics system can be used as sensor (C).
The content control unit (1) consists of connected, communicating and cooperating with each other:
- operating system of the mobile content management system (4),
- System database (5),
- Remote communication system between the mobile management system and the central cloud content management system (6),
- Advertising content repository (7) being the physical space in the memory card,
- Input bus connecting sensors and external devices (cameras) with a mobile content management system (8),
- Image processing system from external cameras (9),
- Artificial intelligence system, a decision engine containing rules, conditions that process external signals and decide how the content is to be displayed depending on the parameters set (10),
- Output bus transmitting the image to an external display (11) i.e. to an advertising content carrier (N),
- auto-diagnostic software (12),
- Power supply system (13).

As the advertising content carrier (N), a large-format LED display made of flexible material and with a high IP69K tightness class is used, composed of segments - panels (SE), printed and glued in the form of a sticker.

The advertising content management module (3) is responsible for the process of exporting the presented content - ads (R) to the mobile system, planning their emission in mobile systems, as well as sending the finished emission from the planner, verifying the result and reporting reports as well as archiving them.

The advertising content management module (3) contains a decision engine in the form of software and / or software and / or algorithm that allows you to decide what advertising content (R), based on their description, to which mobile system to send, including using archival information - historical. An advertising content (N) is placed on the side of the mobile running platform (RP) on at least one vertical longitudinal and / or transverse side - a semi-trailer or truck.

### Example 3 (locally implemented system fig. 3, mobile running platform (RP) - tram or crossroads)

In the first step data (D) flowing from local sensors (C) is read, i.e. information about the ambient conditions, preferably such a : location and speed of movement, weather conditions, traffic, the number of potential recipients, sex, age.

In the second step, preliminary processing of the acquired (WPD) data (D) is performed, and the acquired data (D) and the result of the preliminary data analysis (WA) are imported into intelligent analysis algorithms (Al) operating locally, in the memory (P) of the mobile content control unit (1), In the third step, performs the intelligent analysis (Al) by means of algorithms - artificial intelligence (S) and / or decision trees, and / or decision tables and / or self-learning mechanisms (MS), wherein in the fourth step, artificial intelligence (S) and / or self-learning mechanisms (MS) match the presented content - the advertisement (R) to the recipients of the content / environment (O) and then displays it on the advertising content carrier (N).

Use of location information (from GPS / telematics) - adapting the advertisement (R) to the location e.g. If the mobile platform (RP) is in Germany - German advertisements e.g. sausages.

The ad content (R) is cyclically adapted to the recipients (O) i.e. every 1 or 2 minutes, and / or in connection with a change in environmental conditions, and / or a change in recipients, and / or a change in the location of the mobile content control unit (1) and / or an external event by cyclically passing all four steps.

Artificial intelligence (s) and / or mechanisms of self-learning (MS) allow tutoring(learning) and improve the rules of the system so that the presented content - ads (R) as the most suitable was to predefined recipients (O) is recognized recipients or their absence, the in addition, it is possible to learn the system based on historical data stored in the cloud.

In the fourth step, the presented content is displayed - a precise (R) advertisement tailored to a given place and / or time and / or external conditions and / or anticipated / previously identified / previously defined preferences of content recipients (O).

The presented content is displayed - the advertisement (R) tailored to different groups of recipients (O) in different geographical, ethnic or linguistic regions, and adapted to external factors in correlation with the rules determined by the advertiser's promotional strategy in relation to one and / or entire groups products, while (R) ads may appear in a loop.

In the fourth step, the presented content is displayed - (R) precise ad tailored to the recipients (O), while the system rules allow for the exclusion of advertisers, i.e. restrictions on the requirements of displaying (R) content, position, time restrictions or other advertisers.

The mobile system is (consists of): a mobile content control unit (1), a display module (2), an advertising content management module (3), where the mobile content control unit (1) contains memory (P) and is wired and / or wirelessly connected: display module (2) being the advertising content carrier (N) and with sensors (C), while the mobile content control unit (1) is connected wirelessly, via GSM or Wi-fi or Bluetooth, with the CMS advertising content management module (3 ), and the mobile content control unit (1) and display module (2) are placed on a mobile running platform (RP) by truck or bus .
Advertising content management module (3) software is placed in the cloud, and includes a remote content management system (CMS).
As sensors (C), are used sensors such as: temperature sensor, pressure sensor, time of day weather station, and cameras (s), but also a telematics system can be used as sensor (C) . The content control unit (1) consists of connected, communicating and cooperating with each other:
- operating system of the mobile content management system (4),
- System database (5),
- Remote communication system between the mobile management system and the central cloud content management system (6),
- Advertising content repository (7) being the physical space in the memory card,
- Input bus connecting sensors and external devices (cameras) with a mobile content management system (8),
- Image processing system from external cameras (9),
- Artificial intelligence system, a decision engine containing rules, conditions that process external signals and decide how the content is to be displayed depending on the parameters set (10),
- Output bus transmitting the image to an external display (11) i.e. to an advertising content carrier (N),
- auto-diagnostic software (12),
- Power supply system (13).

As the advertising content carrier (N), a large-format LED display made of flexible material and with a high IP69K tightness class is used, composed of segments - panels (SE), printed and glued in the form of a sticker.
The advertising content management module (3) is responsible for the process of exporting the presented content - ads (R) to the mobile system, planning their emission in mobile systems, as well as sending the finished emission from the planner, verifying the result and reporting reports as well as archiving them.
The advertising content management module (3) contains a decision engine in the form of software and / or software and / or algorithm that allows you to decide what advertising content (R), based on their description, to which mobile system to send, including using archival information - historical. An advertising content (N) is placed on the side of the mobile running platform (RP) on at least one vertical longitudinal and / or transverse side of the tram or intersection, i.e. a pole at the intersection.
The mobile content control unit (1) and display module (2) are located locally, i.e. permanently at the place where the advertisement is displayed on stationary displays and / or crossroads.

Mobile control unit content (1) manages and works autonomously and processes data locally in the absence of access to the network or the lack of communication with the cloud data and rules included in an advertising content management module (3), thus enabling the normal operation of the mobile content control unit (1) until reconnection or communication with the rest of the system which means communication with a advertising content management module (3) is restored.

### List of items

D. data
C. sensors
S. artificial intelligence
MS. self-learning mechanisms
A. content recipient
RP. Mobile platform
N. advertising content carrier
R. presented content - advertisement
1. Mobile content control unit
2. Display module
3. Advertising content management module
P. memory
WPD. preliminary processing of obtained data
WA. analysis result
Al. Intelligent analysis
4. The operating system of the mobile content management system
5. System database
6. Remote communication system between the mobile management system and the central cloud content management system
7. Advertising content repository
8. Input bus connecting sensors and external devices (cameras) with a mobile content management system
9. Image processing system from external cameras
10. Artificial intelligence system, a decision engine containing rules, conditions that process external signals and decide how the content is to be displayed depending on the parameters set
11. Output bus transmitting the image to an external display
12. Auto-diagnostic software
13. Power supply system
MWPD. Pre-processing module of acquired data
SE. Display segment
CMS. Content Management System
N. content carrier
R. advertisement
O. recipients

## Claims

1. The method of selecting and presenting content in particular dynamic personalized advertising using data from local sensors and artificial intelligence algorithms **characterized in that** in the first step data (D) flowing from local sensors (C) is read, i.e. information about the ambient conditions, preferably such a : location and speed of movement, weather conditions, traffic, the number of potential recipients, sex, age, and then,
in the second step, preliminary processing of the acquired (WPD) data (D) is carried out, and the acquired data (D) and the result of the preliminary data analysis (WA) are imported into intelligent analysis algorithms (Al) operating locally, preferably in memory (P) of the mobile control unit content (1), in the third step, an intelligent analysis (Al) is made by the algorithms - preferably algorithms of artificial intelligence (S) and / or decision trees, and / or decision tables and/or self-learning mechanisms (MS), preferably by neural networks - self-learning networks , whereas in the fourth step artificial intelligence (S) and / or self-learning mechanisms (MS) match the presented content - the advertisement (R), to the recipients of the content / environment (O) and then displays it on the advertising content carrier (N).

2. The method according to claim 1, **characterized in that,** cyclically is made to adapt the content of the advertisement (R) to the recipients (O) at preferably 10 minutes, and / or due to changes in ambient conditions, and / or changes of recipients , and / or changes of location of the mobile content control unit (1) and / or external event, by cycling through all its four steps.

3. The method according to claim 1, **characterized in that,** the artificial intelligence (S) and / or self-learning mechanisms (MS) allow tutoring and improve preferably the rules of the system to present content - advertisement (R), to the most customized predefined recipients (O), which means recognized recipients or their absence, while additionally, it is possible tutoring system on the basis of historical data stored in the cloud.

4. The method according to claim 1, **characterized in that,** in the fourth step is displayed a presented content - advertisement (R), which is precisely matched to a particular place and / or time and / or external conditions and / or projected / previously recognized / pre-defined preferences of recipients of content (O).

5. The method according to claim 4, **characterized in that,** the presented content is displayed - advertisement(R) tailored to different groups of recipients (O) in different geographical, ethnic or linguistic regions, and adapted to external factors in correlation with the rules determined by promotional strategy of advertisers, in relation to one and / or entire groups of products , preferably advertisement (R) can be displayed in a loop.

6. The method according to claim 1 and 4, **characterized in that,** in the fourth step, displays presented content - advertisement (R) is precisely adapted to the recipients (O), wherein the system rules enables to make a restrictions for advertisers i.e. restrictions on the delivery requirements advertisement (R), preferably content, position and time restrictions of other advertisers.

7. Mobile system of selecting and presenting content in particular dynamic personalized advertising using the content control unit and display **characterized in that,** the system is made of: mobile content control unit (1), display module (2), advertising content management module (3), while the mobile content control unit (1) has a memory (P) and is wired and / or wireless connected to: the display module (2) being the carrier of advertising content (N) and the sensors (C), wherein the mobile content control unit (1) is wireless connected, preferably using GSM or Wi-fi or Bluetooth, with the CMS advertising content management module (3);while the mobile content control unit (1) and display module (2) are placed on a mobile running platform (RP), preferably a semi-trailer or truck or bus or streetcar.

8. Mobile system according to claim 7, **characterized in that,** the advertising content management module (3) is preferably software located in the cloud and contains a remote content management system (CMS) .

9. Mobile system according to claim 7, **characterized in that,** as sensors (C) are used sensors, preferably: temperature, pressure, time of day - preferably station weather , and the camera/cameras, wherein the sensor (C) can be used the telematics system.

10. Mobile system according to claim 7, **characterized in that,** the mobile content control unit (1) consists of connected, communicating and cooperating with each other:
- mobile operating system for content management (4),
- System database (5),
- Remote communication system between the mobile management system and the central cloud content management system (6),
- Repository advertising content (7), which is the physical space it in the memory card,
- Input bus connecting sensors and external devices (cameras) with a mobile content management system (8),
- System of image processing from external cameras (9),
- System of artificial intelligence a decision engine containing rules, conditions that process external signals and decide how the content is to be displayed depending on the parameters set (10),
- Output bus transmitting the image to an external display (11) which is a carrier for advertising content (N),
- auto-diagnostic software (12) .
- Power supply system (13).

11. Mobile system according to claim 7, **characterized in that,** as a carrier of advertising content (N) a large-format LED display is used, preferably made of flexible material and with a high tightness class, preferably IP69K, preferably composed of segments - panels (SE), preferably printed and glued in the form of a sticker.

12. Mobile system according to claim 7 and 8, **characterized in that,** the advertising content management module (3) is responsible for the process of export presented content - advertisements (R) to the mobile system, and planning their emissions in mobile systems, as well as sending finished emissions planner, the verification result and reporting reports as well as their archiving.

13. Mobile system according to claim 12, **characterized in that,** the advertising content management module (3) comprises a decision engine preferably is in the form of software and / or algorithm , which enables the decision, as to which advertising content (R), on the basis of their description, to which mobile system is send also including using archival - historical information.

14. Mobile system according to claim 7 and 11, **characterized in that,** the advertising content carrier (N) is placed on the side of the mobile running platform (RP) preferably on at least one vertical longitudinal and / or transverse side - a semi-trailer or truck or bus or tram/street car.

15. Mobile system according to claim 7, **characterized in that,** the mobile content control unit (1) and the display module (2) are located locally, which means permanently in the place of the advertisement presentation, preferably at stationary displays and / or crossroads.
